# EUROPEAN PATENT APPLICATION

(11) **EP 1 129 762 A1**
(43) Date of publication of application: **05.09.2001**
(21) Application number: 01301736.3
(22) Date of filing: 26.02.2001
(51) Int. Cl.: B01D 53/02, B01D 39/20

(54) **Activated carbon filter**

(30) Priority: 03.03.2000 US 518470
(71) Applicant: Stackhouse, Inc., Palm Springs, CA 92262 (US)
(72) Inventor: Acosta, Aristides, Cathedral City, California 92234 (US); Mellette, Gary W., Joshua Tree, California 92252 (US)
(74) Representative: Maury, Richard Philip

(57) **Abstract**

A filter structure for use within a filter system for capturing airborne contaminants and adsorbing odor. The filter structure includes a filtration medium of activated carbon fibers spun into an activated carbon mesh network filter for adsorbing airborne odors such as those transported by smoke and for capturing extremely small airborne particulate. A preferred filter structure includes, in order, a macro filter for capturing larger airborne particulate, an ULPA filter for capturing smaller airborne particulate, and an activated carbon mesh network filter formed of activated carbon fibers spun into a fiber mesh for adsorbing airborne odors and for capturing extremely small airborne particulate not retained by the macro or ULPA filters. The filter structure here defined provides superb particulate removal as well as odor adsorption, and is especially useful in thermal surgical procedures where smoke evacuation is a major goal in working toward maintenance of a safe operation site.

## Description

### FIELD OF THE INVENTION

The present invention relates in general to air filtration, and in particular to a replaceable air and odor filter structure employable for evacuating smoke generated during a surgical procedure and including a filtration medium formed of activated carbon fibers spun into an activated carbon mesh network filter.

### BACKGROUND OF THE INVENTION

Filtration of airborne contaminants is extremely important where such contaminants have the potential of causing both short-term and long-term health hazards to those who would be exposed to breathing and/or otherwise contacting the untoward components in the air so filtered. One exemplary, but non-limiting, environment where potentially dangerous contaminants may be present is found in a surgical theater where patient tissue is exposed to electrosurgical excision, cauterization, or like heat producing treatments that cause smoke having tissue particulate therewith to emanate from the treatment site and enter the immediate atmosphere. Such particulate can be especially dangerous if its origin is from disease-containing tissue and if that particulate has a tendency to retain disease-transference capabilities.

The necessity for filtration systems to be able to effectively remove airborne particulate, including that found in smoke produced by burning tissue during a surgical procedure, is recognized in the prior art. For example, U.S. Patent Nos. 4,810,269 to Stackhouse, et al., 5,226,939 to Nicolas et al., and 5,456,248 to Holian et al. all teach variously configured mobile filtration systems capable of removing extremely small particles present in smoke generated during such heat-producing surgical procedures.

At the heart of any filtration system is, of course, the effectiveness of its filter medium. In particular, filter media used in surgical applications must be able to remove ultra-small particulate with high efficiency. Additionally, because tissue sear can be irritatingly odorous as well as contaminated, a filtration system that addresses odor treatment can be highly beneficial.

In view of the above beneficial characteristics for safe and efficient airborne particulate capture, a primary object of the present invention is to provide a filter structure incorporating an activated carbon mesh network filter formed of spun carbon fibers for capturing airborne particulate and adsorbing airborne odors.

Another object of the present invention is to provide a filter structure wherein the activated carbon mesh network filter thereof has a pore diameter between about seven and 10 angstroms.

Yet another object of the present invention is to provide a filter structure wherein the activated carbon mesh network filter thereof is preceded by an ULPA filter such that air passing through the filter structure passes last through the activated carbon mesh network filter.

These and other objects of the present invention will become apparent throughout the description thereof which now follows.

### BRIEF SUMMARY OF THE INVENTION

The present invention is a filter structure for use within a filter system for capturing airborne contaminants and adsorbing odor. The filter structure includes a filtration medium comprising activated carbon fibers spun into an activated carbon mesh network filter for capturing airborne particulate and for adsorbing airborne odors such as those transported by smoke. Preferably, the structure comprises, in order, the following three filter media: (a) a macro filter for capturing airborne particulate having a cross sectional area of a first size; (b) an ULPA filter for capturing airborne particulate having a cross sectional area of a second size smaller than the first size; and (c) an activated carbon mesh network filter formed of activated carbon fibers spun into a fiber mesh for adsorbing airborne odors and for capturing airborne particulate having a cross sectional area smaller than the second size and preferably down to about 0.12 microns.

Because of the spun fiber construction of the activated carbon mesh network filter, the resulting exposed carbonaceous surface area for odor adsorption is effectively enhanced as compared to adsorption capabilities of granular or powder carbon exposure. Additionally, the spun fiber construction assures uniformity of air flow which translates to a beneficially long life span and resultant lower costs. Functionally, the filter structure here defined provides superb particulate removal as well as odor adsorption, and is especially useful in thermal surgical procedures where smoke evacuation is a major goal in working toward maintenance of a safe operation site.

### BRIEF DESCRIPTION OF THE SEVERAL VIEWS OF THE DRAWING

An illustrative and presently preferred embodiment of the invention is shown in the accompanying drawings in which:
Figure 1 is a schematic side elevation view in section of a prior art filter structure employing granular activated carbon;
Figure 2 is a side elevation view partially in section of a filter structure comprising an activated carbon mesh network filter; and
Figure 3 is an enlarged view of a designated portion of the filter structure of Figure 2 as there encircled in phantom lines.

### DETAILED DESCRIPTION OF THE INVENTION

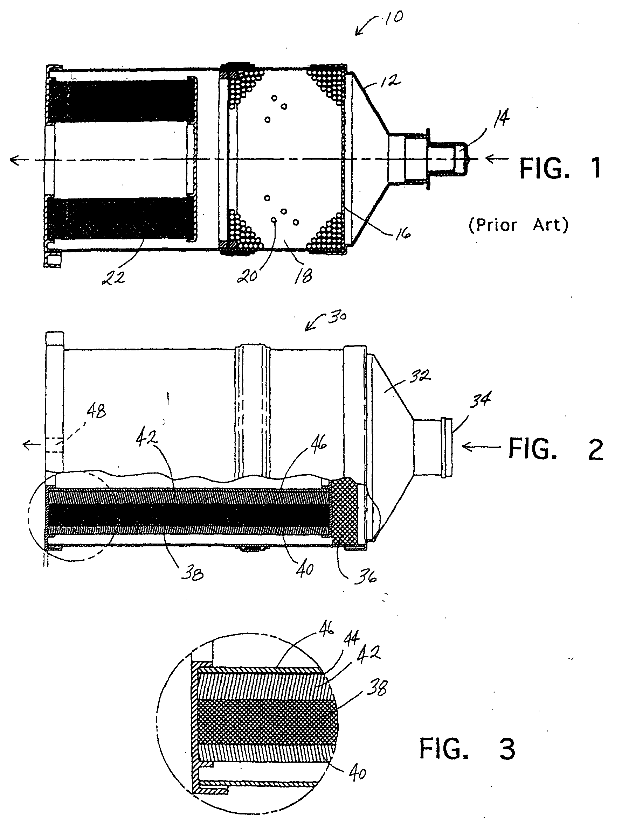

Referring to Figure 1, a prior art filter structure 10 is illustrated. The structure 10 includes an external housing 12 having an air intake 14 through which air is conventionally drawn for filtration as indicated by an arrow. Immediately downstream from the air intake 14 is a macro filter 16 for capturing relative large particulate that may be present in air to be filtered. Once air travels through the macro filter 16, it passes among a cylinder 18 substantially filled with activated carbon granules 20 whose function is to adsorb odor from the passing air. (It is to be noted that Figure 1 shows, for clarity, only minimal presence of carbon granules 20.) Finally, upon departure from the cylinder 18, the air passes through an ULPA filter 22 as known in the art to remove remaining particulate down to the size of interstices there present. Thereafter, the filtered air passes outwardly from the filter structure 10 as indicated by a departure arrow. As is thus apparent, prior art filter structures 10 provide only activated carbon granules 20 for odor adsorption, and such carbon granules 20 tend to reach odor adsorption capacity relatively quickly because surface area availability for adsorption is relatively limited. Once such capacity is reached, odorous air is discharged from the filter structure 10 back to the environment for potentially hazardous inhalation by personnel in the area.

Figures 2 and 3 illustrate the preferred embodiment of the present invention. Specifically, a filter structure 30 includes an external housing 32 having an air intake 34 through which air is conventionally drawn for filtration as indicated by an arrow. Immediately downstream from the air intake 34 is a macro filter 36 for capturing relative large particulate that may be present in air to be filtered. Once air travels through the macro filter 36, which here is a standard high loft polyester pad about 0.75 inch thick, the air passes into and through a standard ULPA filter 38 which is pleated and externally singularly wrapped with a fiberglass sheet 40, here being a 0.27 inch thick sheet manufactured by Manville Corp., Denver, Colorado, as type AFS-3-1/4 B2. Immediately downstream from the ULPA filter 38 and in contact therewith is an activated carbon mesh network filter 42, here as manufactured by Enhanced Filter Co., Ventura, California, under the name ULTRASORB B, U-200. The activated carbon mesh network filter 42 has an average pore diameter of seven to 10 angstroms and is constructed of activated carbon fibers spun into a fiber mesh for adsorbing airborne odors and for capturing airborne particulate having a cross sectional area down to about 0.12 microns and not earlier captured by the preceding ULPA filter 38. Its general pad-like construction can preferably be provided in a two-wrap configuration. A single standard cover web 44 and polypropylene mesh sheet 46 with about a 35% open area are positioned over the exposed surface of the activated carbon mesh network filter 42 as shown. As is evident, by placing the activated carbon mesh network filter 42 last in the sequence of filtration media, its time of filtration capability is lengthened since its mesh network is not exposed to polluted air until two preceding filter media first are exposed. In this manner the activated carbon there present remains active for odor adsorption rather than becoming clogged early with particulate.

Employment of filter structures 30 in association with surgical smoke evacuation devices results in the capture of microscopic and macroscopic particulate, along with the capture of simultaneously produced odorous vapors emanating from patient tissue within and upon the activated carbon mesh network filter 42. Thus, in an operating room environment where patient tissue is exposed to electrosurgical excision, cauterization, or like heat producing treatments that cause smoke having tissue particulate therewith to emanate from the treatment site and enter immediate atmospheric air. a typical surgical smoke evacuation device employing the filter structure 30 conventionally draws such air into the air intake 34. The air travels first through the macro filter 36 where any relatively large particulate that may be present is captured. Next, the air passes into and through the ULPA filter 38 where any particulate so filterable by the ULPA filter and not earlier retained by the macro filter is collected. Upon exit from the ULPA filter, the air traverses the activated carbon mesh network filter 42 where airborne odors are adsorbed by the carbon and any remaining particulate having a cross sectional area down to about 0.12 microns and not earlier captured is retained. The cleansed air then is discharged from the filter structure through an outlet 48 as illustrated by an arrow in Figure 2 to thereby return to the ambient atmosphere.

In the manner above described, as is evident therefrom, construction of the filter structure 30 promotes uniform air flow which results in greater filtration life before replacement since all filter media are advantageously exposed to passing polluted air. Enhanced filtration life not only leads to a greater economy of operation, but also produces environmental cleanliness and safety for those dependent upon ambient air quality. While an illustrative and presently preferred embodiment of the invention has been described in detail herein, it is to be understood that the inventive concepts may be otherwise variously embodied and employed and that the appended claims are intended to be construed to include such variations except insofar as limited by the prior art.

## Claims

1. A replaceable filter structure for use within a filter system for capturing airborne contaminants and adsorbing odor, said filter structure positionable within an airflow channel of the filter system through which air to be filtered is drawn under pressure, the filter structure comprising a filtration medium comprising activated carbon fibers spun into an activated carbon mesh network filter for capturing airborne particulate and for adsorbing airborne odors.

2. A replaceable filter structure as claimed in Claim 1 wherein the activated carbon mesh network filter is of generally uniform thickness.

3. A replaceable filter structure as claimed in Claim 1 wherein pore diameter of the activated carbon mesh network filter is from about seven to about 10 angstroms.

4. A filter structure comprising, in order:
a) a macro filter for capturing airborne particulate having a cross sectional area of a first size;
b) an ULPA filter for capturing airborne particulate having a cross sectional area of a second size smaller than said first size; and
c) an activated carbon mesh network filter comprising activated carbon fibers spun into a fiber mesh for adsorbing airborne odors and for capturing airborne particulate having a cross sectional area of a third size smaller than said second size.

5. A filter structure as claimed in Claim 4 wherein the third size is about 0.12 microns.

6. A filter structure as claimed in Claim 4 comprising in addition an external housing having an air intake situated upstream from the macro filter for receiving ambient air drawn thereto under pressure.

7. A filter structure as claimed in Claim 4 wherein the ULPA filter is pleated.

8. A filter structure as claimed in Claim 4 wherein pore diameter of the activated carbon mesh network filter is from about seven to about 10 angstroms.

9. A filter structure as claimed in Claim 4 wherein the activated carbon mesh network filter is a pad configuration of generally uniform thickness.
